(19) Europäisches Patentamt
European Patent Office
Office européen des brevets

(11) **EP 4 723 364 A1**

(12) **EUROPEAN PATENT APPLICATION**
published in accordance with Art. 153(4) EPC

(43) Date of publication:
**08.04.2026 Bulletin 2026/15**

(21) Application number: **24822571.6**

(22) Date of filing: **31.05.2024**

(51) International Patent Classification (IPC):
**H01P 1/18** (2006.01)        **H04B 10/2575** (2013.01)
**G02F 1/01** (2006.01)

(52) Cooperative Patent Classification (CPC):
**H01P 1/18; H01Q 1/50; H01Q 3/34; H01Q 21/00;
H04B 10/2575; G02F 1/01**

(86) International application number:
**PCT/CN2024/096762**

(87) International publication number:
**WO 2024/255619 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.06.2023  CN 202310715387**

(71) Applicant: **Huawei Technologies Co., Ltd.
Shenzhen, Guangdong 518129 (CN)**

(72) Inventors:
• **LOU, Yannian**
  **Shenzhen, Guangdong 518129 (CN)**
• **ZHU, Qingming**
  **Shenzhen, Guangdong 518129 (CN)**
• **GUO, Xiaoqing**
  **Shenzhen, Guangdong 518129 (CN)**

(74) Representative: **Maiwald GmbH
Elisenhof
Elisenstraße 3
80335 München (DE)**

(54) **PHASE SHIFT APPARATUS**

(57)    This application provides a phase shift apparatus. The apparatus includes a first phase shift module, a second phase shift module, and M combiners, where M is an integer greater than 1. An input interface of the first phase shift module is configured to receive a carrier component of a first signal, and one of M output interfaces of the first phase shift module is connected to a first input interface of one of the M combiners. An input interface of the second phase shift module is configured to receive a sideband component of the first signal, and one of M output interfaces of the second phase shift module is connected to a second input interface of one of the M combiners. An output interface of one of the M combiners is configured to connect to an input interface of one of M antenna elements in an antenna array. Compared with a conventional phase shift apparatus, the phase shift apparatus provided in this application can improve dispersion efficiency by an order of magnitude, and can be made in a small size or integrated on a single chip.

□ Input interface    △ Output interface    ○ Combiner

FIG. 3

EP 4 723 364 A1

## Description

This application claims priority to Chinese Patent Application No. 202310715387.8, filed with the China National Intellectual Property Administration on June 15, 2023 and entitled "PHASE SHIFT APPARATUS", which is incorporated herein by reference in its entirety.

## TECHNICAL FIELD

This application relates to the field of optical communication, and more specifically, to a phase shift apparatus.

## BACKGROUND

In a fully-connected hybrid beamforming (hybrid beamforming, HBF) antenna system, a phase shifter is inserted between any transceiver unit and any antenna element to implement beamforming in an analog domain, and any phase shifter may independently weight a signal. In this case, there are a total of N multiplied by M weights. In a case that a fully-connected HBF antenna system has many antenna elements, for example, the system includes M antenna elements and N transceiver units, where M is greater than N, the conventional fully-connected HBF antenna system needs N multiplied by M phase shifters, and a quantity of phase shifters is excessively large, resulting in excessively high hardware complexity. A simplified idea is that the fully-connected HBF antenna system implements only steering vector beams, and each beam controls two directions: horizontal and vertical directions. In this case, a minimum quantity of weights required in theory is 2N. How to specifically reduce the quantity of phase shifters to the minimum weight quantity 2N, in other words, how to decouple the quantity of phase shifters from an antenna element scale of the HBF antenna system, the microwave photonics field provides a good direction for implementing the foregoing requirement. To implement a steering vector HBF antenna system, an optical domain dispersion effect may be used. A basic idea is to use a hardware fixed (pure passive) dispersion phase shift network, where a phase of an output signal of the dispersion phase shift network changes with a wavelength of an input microwave photonics signal. After the wavelength of the microwave photonics signal is changed, phases of output signals of all channels in the entire dispersion phase shift network are synchronously refreshed, so that the phase shifter can be decoupled from the antenna scale of the HBF antenna system.

However, a dispersion effect of a conventional dispersion phase shift apparatus is excessively weak, and consequently, the conventional dispersion phase shift apparatus cannot be made in a small size or integrated on a single chip, and manufacturing costs and a manufacturing scale become a bottleneck limiting further application of the conventional dispersion phase shift apparatus.

## SUMMARY

This application provides a phase shift apparatus, which can improve dispersion efficiency by an order of magnitude, and can be made in a small size or integrated on a single chip.

According to a first aspect, a phase shift apparatus is provided. The phase shift apparatus includes: a first phase shift module, a second phase shift module, and M combiners, where M is an integer greater than 1. An input interface of the first phase shift module is configured to receive a carrier component of a first signal, and one of M output interfaces of the first phase shift module is connected to a first input interface of one of the M combiners. An input interface of the second phase shift module is configured to receive a sideband component of the first signal, and one of M output interfaces of the second phase shift module is connected to a second input interface of one of the M combiners. An output interface of one of the M combiners is configured to connect to an input interface of one of M antenna elements in an antenna array.

Based on the foregoing technical solution, the carrier component and the sideband component of the first signal are respectively input to the apparatus from the input interfaces of the two phase shift modules of the phase shift apparatus. The CS (where C represents a carrier (carrier), and S represents a sideband (sideband)) separation dispersion mechanism can improve dispersion efficiency by an order of magnitude compared with a conventional dispersion phase shift apparatus, so that the phase shift apparatus can be made in a small size or integrated on a single chip.

In some implementations, the first phase shift module includes M delay lines, and a first end and a second end of one of the M delay lines of the first phase shift module are respectively connected to the input interface of the first phase shift module and one of the M output interfaces of the first phase shift module. The second phase shift module includes M delay lines, and a first end and a second end of one of the M delay lines of the second phase shift module are respectively connected to the input interface of the second phase shift module and one of the M output interfaces of the second phase shift module.

In some implementations, the M delay lines of the first phase shift apparatus are included in M1 delay line sets, each delay line set includes M2 delay lines, M1 is a quantity of horizontally dimensional antenna elements of the antenna array and M2 is a quantity of vertically dimensional antenna elements of the antenna array, or M1 is a quantity of vertically dimensional antenna elements of the antenna array and M2 is a quantity of horizontally dimensional antenna elements of the antenna array, M is equal to a product of M1 and M2, and each of the M delay lines of the first phase shift module includes a first delay line and a second delay line that correspond to the delay line. Lengths of first delay lines corresponding to the M2 delay lines in the delay line set are the same, lengths of corresponding second delay lines sequentially differ by a first value, and lengths of M1 first delay lines corresponding to the M1 delay line sets of the first phase shift module sequentially differ by a second value. The M delay lines of the second phase shift apparatus are included in M1 delay line sets, each delay line set includes M2 delay lines, and each of the M delay lines of the second phase shift module includes a first delay line and a second delay line that correspond to the delay line. Lengths of first delay lines corresponding to the M2 delay lines in the delay line set of the second phase shift module are the same, lengths of corresponding second delay lines sequentially differ by a third value, and lengths of M1 first delay lines corresponding to the M1 delay line sets of the second phase shift module sequentially differ by a fourth value. Neither a first difference nor a second difference is 0, and the first difference is not equal to the second difference. The first difference is an absolute value of a difference between the first value and the third value, and the second difference is an absolute value of a difference between the second value and the fourth value.

For ease of description, for example, a length feature of the M delay lines in this implementation may be referred to as an optical path cascading feature.

In the foregoing technical solution, based on the optical path cascading feature, a phase of a signal may be adjusted in two dimensions (dimensionality): horizontal and vertical dimensions. In addition, the first difference and the second difference may be used to represent dispersion intensity in the horizontal and vertical dimensions, and there should be a difference between the first difference and the second difference, so that a center wavelength of a microwave photonics signal based on the first signal may have phase differences of different change trends in horizontal and vertical directions, thereby implementing 2D beamforming.

In some implementations, lengths of the M delay lines of the first phase shift apparatus sequentially differ by a first value; and lengths of the M delay lines of the second phase shift apparatus sequentially differ by a second value.

According to a second aspect, a phase shift apparatus is provided. The phase shift apparatus includes: a first phase shift module. The first phase shift module includes M delay lines, and a first end and a second end of one of the M delay lines are respectively connected to an input interface of the first phase shift module and one of M output interfaces of the first phase shift module. The M output interfaces of the first phase shift module are connected to M antenna elements in an antenna array, and M is an integer greater than 1. The M delay lines are included in M1 delay line sets, each delay line set includes M2 delay lines, M1 is a quantity of horizontally dimensional antenna elements of the antenna array and M2 is a quantity of vertically dimensional antenna elements of the antenna array, or M1 is a quantity of vertically dimensional antenna elements of the antenna array and M2 is a quantity of horizontally dimensional antenna elements of the antenna array, M is equal to a product of M1 and M2, and each of the M delay lines of the first phase shift module includes a first delay line and a second delay line that correspond to the delay line. Lengths of first delay lines corresponding to the M2 delay lines in the delay line set are the same, lengths of corresponding second delay lines sequentially differ by a first value, and lengths of M1 first delay lines corresponding to the M1 delay line sets of the first phase shift module sequentially differ by a second value. Neither the first value nor the second value is 0, and the first value is not equal to the second value.

In the foregoing technical solution, based on an optical path cascading feature, a phase of a signal may be adjusted in two dimensions (dimensionality): horizontal and vertical dimensions. In addition, the first value and the second value may be used to represent dispersion intensity in the horizontal and vertical dimensions, and there should be a difference between the first value and the second value, so that a center wavelength of a microwave photonics signal based on a first signal may have phase differences of different change trends in horizontal and vertical directions, thereby implementing 2D beamforming.

In some implementations, the phase shift apparatus further includes: a second phase shift module. An input interface of the second phase shift module is configured to receive a sideband component of the first signal. The input interface of the first phase shift module is configured to receive a carrier component of the first signal. The second phase shift module includes M delay lines, and a first end and a second end of one of the M delay lines are respectively connected to the input interface of the second phase shift module and one of M output interfaces of the second phase shift module. The M delay lines are included in M1 delay line sets, each delay line set includes M2 delay lines, and each of the M delay lines of the second phase shift module includes a first delay line and a second delay line that correspond to the delay line. Lengths of first delay lines corresponding to the M2 delay lines in the delay line set of the second phase shift module are the same, lengths of corresponding second delay lines sequentially differ by a third value, and lengths of M1 first delay lines corresponding to the M1 delay line sets of the second phase shift module sequentially differ by a fourth value. Neither a first difference nor a second difference is 0, and the first difference is not equal to the second difference. The first difference is an absolute value of a difference between the first value and the third value, and the second difference is an absolute value of a difference between the second value and the fourth value. The phase shift apparatus further includes: M combiners. One of the M output interfaces of the first phase shift module is connected to an input interface of one of the M combiners. One of the M output interfaces of the second phase shift module is connected to an input interface of one of the M combiners. An output interface of one of the M combiners is configured to connect to an input interface of one of M antenna elements.

In the foregoing technical solution, the carrier component and the sideband component of the first signal are respectively input to the apparatus from the input interfaces of the two phase shift modules of the phase shift apparatus. The CS separation dispersion mechanism can improve dispersion efficiency of the phase shift apparatus by an order of magnitude compared with a conventional phase shift apparatus, so that the phase shift apparatus can be made in a small size or integrated on a single chip.

In some implementations, the first value and the third value have opposite signs, and/or the second value and the fourth value have opposite signs.

In the foregoing technical solution, in comparison with dispersion phase shifting performed on a single component: a carrier component or a sideband component, the dispersion efficiency can be doubled.

In some implementations, a first delay line corresponding to each of M1 delay line sets in a third phase shift module is separately a common delay line of the corresponding delay line set, and the third phase shift module is the first phase shift module or the second phase shift module.

For example, in this implementation, a topology structure corresponding to the M delay lines may be referred to as a pure parallel-feed topology structure. Based on the topology structure, dividers connected to all delay lines in the phase shift apparatus may be equal, and a network design is simple.

In some implementations, the first delay line of each of M delay lines of the third phase shift module includes a third delay line and a fourth delay line included in the delay line, where the third delay line in the first delay line in at least two delay line sets of the M1 delay line sets of the third phase shift module is a common delay line of the at least two delay line sets; and/or a second delay line of each of M delay lines of the third phase shift module includes a fifth delay line and a sixth delay line included in the delay line, where the fifth delay line in the second delay line in at least two delay line sets of the M1 delay line sets of the third phase shift module is a common delay line of the at least two delay line sets.

For example, in this implementation, a topology structure corresponding to the M delay lines may be referred to as a cascading parallel-feed topology structure. It may be understood that, in this topology structure, some delay lines of adjacent delay lines in the pure parallel-feed structure are multiplexed, to significantly reduce a chip size.

In some implementations, the phase shift apparatus further includes: a first chip and M1 second chips. Both the first delay line of each of the M delay lines of the first phase shift module and the first delay line of each of the M delay lines of the second phase shift module are located in the first chip. Both the second delay lines of the M2 delay lines in one of the M1 delay line sets of the first phase shift module and the second delay lines of the M2 delay lines in one of the M1 delay line sets of the second phase shift module are located in one of the M1 second chips.

The foregoing technical solution has advantages of significant reduction of a specification requirement of an optical chip and a flexible location of an output port. For example, when the M paths in the first phase shift module and the second phase shift module are of pure parallel feed, the following beneficial effects may be specifically achieved. First, locations of the M1 second chips may be flexibly adjusted, to match a large-size back-end module such as an antenna. Second, structures of the M1 second chips are completely the same, and the phase shift apparatus may be implemented by using only two types of optical chips. Third, each optical chip channel has an M1 or M2 scale. In comparison with a single chip that needs to be implemented in an M1*M2 scale, a specification requirement on a single chip is significantly reduced, implementation is easier, and a yield rate is better to control. Fourth, a minimum quantity of connections needed between the first chip and the M1 second chips is only 2*M1, and packaging difficulty and costs are low. In addition, if an optical amplifier needs to be added between the first chip and the second chip, a quantity of needed optical amplifiers is also small.

In some implementations, the first phase shift module includes a first divider, the first divider includes M1 power division paths, a first end of the M1 power division paths in the first divider is connected to the input interface of the first phase shift module, a second end of one of the M1 power division paths in the first divider is separately connected to a first end of one of the M1 common first delay lines of the first phase shift module, and a first end of one first delay line in the first phase shift module is the same as a first end of any one of M2 delay lines in a delay line set corresponding to the first delay line. A first end of the M1 power division paths in the second divider is connected to the input interface of the second phase shift module.

In some implementations, the second phase shift module includes a second divider, the second divider includes M1 power division paths, a first end of the M1 power division paths in the second divider is connected to the input interface of the second phase shift module, a second end of one of the M1 power division paths in the second divider is separately connected to a first end of one of the M1 common first delay lines of the second phase shift module, and a first end of one first delay line in the second phase shift module is the same as a first end of any one of M2 delay lines in a delay line set corresponding to the first delay line.

In some implementations, deviations between lengths of the M1 power division paths of the first phase shift module and a first length and deviations between lengths of the M1 power division paths of the second phase shift module and the first length are both less than a first threshold.

In the foregoing technical solution, it may be considered as that the M power division paths in the first divider and the second divider are all wired with equal lengths.

In some implementations, deviations between lengths of the M1 power division paths of the first phase shift module and a second length are less than a second threshold, and deviations between lengths of the M1 delay lines of the second phase shift module and a third length are less than a third threshold.

In the foregoing technical solution, it may be considered as that the M power division paths in the first divider are wired with equal lengths, and the M power division paths in the second divider are wired with equal lengths. For example, lengths of the first divider and the second divider may be the same, or may be different.

In some implementations, a deviation between a fourth length and a distance between N% of a path length of a first power division path and N% of a path length of a second power division path is less than a fourth threshold, N is greater than 0, the first power division path is a power division path that is used for transmission of a second signal and that is in M power division paths of the first phase shift module, the second power division path is a power division path that is used for transmission of a third signal and that is in M power division paths of the second phase shift module, and the second signal and the third signal are respectively the sideband component and the carrier component of the first signal that are output to a same combiner in the M combiners.

Based on the foregoing technical solution, the first power division path and the second power division path in the first divider and the second divider are as close as possible in physical locations, so that initial phase errors of signals on which transmission is performed on different delay lines can be reduced.

According to a third aspect, an antenna apparatus is provided. The antenna apparatus includes: the phase shift apparatus according to any one of the first aspect or the second aspect or the implementations of the first aspect or the second aspect.

For example, the antenna apparatus is an active antenna unit AAU or a remote radio unit RRU.

According to a fourth aspect, a method for phase shifting is provided. The method includes: separating a first signal to generate a carrier component of the first signal and a sideband component of the first signal; inputting the carrier component of the first signal to an input interface of a first phase shift module of a phase shift apparatus; and inputting the sideband component and the carrier component of the first signal to an input interface of a second phase shift module of the phase shift apparatus. The phase shift apparatus is the phase shift apparatus according to any one of the first aspect or the second aspect or the implementations of the first aspect or the second aspect.

## BRIEF DESCRIPTION OF DRAWINGS

FIG. 1 is a diagram of a fully-connected HBF antenna system;
FIG. 2 is a diagram of a conventional optical domain dispersion phase shift apparatus;
FIG. 3 is a diagram of a structure of a phase shift apparatus according to an embodiment of this application;
FIG. 4 is a diagram of a structure of another phase shift apparatus according to an embodiment of this application;
FIG. 5 is a diagram of a structure of still another phase shift apparatus according to an embodiment of this application;
FIG. 6 is a diagram of a pure parallel-feed topology structure of M delay lines according to an embodiment of this application;
FIG. 7 is a diagram of a cascading parallel-feed topology structure of M delay lines according to an embodiment of this application;
FIG. 8 is a diagram of a series-feed and parallel-feed topology structure of M delay lines according to an embodiment of this application;
FIG. 9 is a diagram of a pure series-feed topology structure of M delay lines according to an embodiment of this application;
FIG. 10 is a diagram of a structure of a specific phase shift apparatus according to this application;
FIG. 11 is a diagram of a structure of the phase shift apparatus shown in FIG. 10 that has undergone fragmentation processing;
FIG. 12 is a diagram of a possible arrangement of a first power division path and a second power division path in a first divider and a second divider according to an embodiment of this application; and
FIG. 13 is diagram of another possible arrangement of a first power division path and a second power division path in a first divider and a second divider according to an embodiment of this application.

## DESCRIPTION OF EMBODIMENTS

The following describes technical solutions of this application with reference to accompanying drawings.

It should be noted that, in descriptions of embodiments of this application, "a plurality of" means two or more, and "at least one" and "one or more" mean one, two, or more than two. Singular expression forms, "one", "a", "said", "foregoing", "the", and "this", are intended to also include such expressions as "one or more", unless clearly indicated to the contrary in the context.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In the following embodiments of this application, the terms such as "include", "have", and any variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. The term like "example" or "for example" is used to present a related concept in a specific manner for ease of understanding.

Parts in the accompanying drawings in embodiments of this application are not drawn to scale. Dimensions and sizes of the parts shown in the figures are merely examples, and should not be construed as a limitation on this application.

In embodiments of this application, "relevant (corresponding, relevant)" and "corresponding (corresponding)" may be interchangeably used sometimes. It should be noted that meanings expressed by the expressions are consistent when a difference between the expressions is not emphasized.

The technical solutions of this application may be applied to a plurality of scenarios, for example, may be applied to hybrid beamforming (hybrid beamforming, HBF) networks, phased array radar, satellite networks, and the like in a wireless base station communication system.

The architecture and the scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

To facilitate understanding of embodiments of this application, concepts and related procedures in this application are described first.

1. HBF: In a base station antenna system, a phase shifter is inserted between some transceiver modules and antenna elements, beamforming in an analog domain is implemented by using the phase shifter, and this beamforming and original beamforming in a digital domain are referred to as HBF.

2. Microwave signal: Microwave signals are electromagnetic wave signals with frequencies ranging from 300 MHz to 300 GHz. The microwave signals are foundation for development and growth of telecommunication, national defense, sensing, medical care, aerospace, and other fields.

3. Microwave photonics (microwave photonics, MWP): Microwave photonics is an important research field at present. A core idea of the microwave photonics is to load a microwave signal to an optical frequency band to generate a microwave photonics signal, thereby shifting processing of the microwave signal (electrical signal) to processing of an optical signal. Most components in a microwave photonics system include optical components, and the components can enjoy advantages of the optical components such as ultra-small size, low-power consumption, ultra-low insertion loss, ultra-large bandwidth, flexible adjustment of microwave signal frequency bands, anti-electromagnetic interference, simple processing, and low costs.

4. Steering vector beam: A beam is obtained by weighting radiation energy of a group of linear phase oscillators. A beam direction may be implemented by adjusting a linear phase slope, that is, a phase difference between adjacent oscillators.

5. Optical domain dispersion effect: The optical domain dispersion effect is a phenomenon that after an optical signal is transmitted through a medium, a phase variation of the signal is related to a wavelength of the signal.

In wireless communication, beamforming is a signal processing technology that implements directional signal sending or receiving by using an antenna array. Beamforming enables an antenna system to achieve spatial selectivity. Compared with an omnidirectional antenna, this antenna system can obtain directivity coefficient gains and avoid spatial interference.

A principle of the beamforming is to weight signals transmitted to or from an antenna array unit (that is, adjust amplitudes and phases of the signals). In this way, the signals undergo constructive interference in some directions and destructive interference in other directions in space, thereby implementing the spatial selectivity. If a weighting procedure is implemented in a digital domain, the weighting procedure is beamforming in the digital domain. If the weighting procedure is implemented in an analog domain, the weighting procedure is beamforming in the analog domain. In the beamforming in the analog domain, a phase shifter is inserted between a transceiver unit and an antenna element, to implement the beamforming in the analog domain by using the phase shifter. If the weighting procedure exists in both the digital domain and the analog domain, the weighting procedure is hybrid beamforming. An advantage of the beamforming in the digital domain is that a plurality of data streams can be carried, and this is a key to implementing (multiple-input multiple-output, MIMO). A disadvantage is that a quantity of transceiver units needs to be consistent with a quantity of antenna array units. In a scenario of many antenna elements (for example, a high frequency), there are excessively transceiver units, resulting in excessively high system costs and complexity. The beamforming in the analog domain is opposite to the beamforming in the digital domain. An advantage of the beamforming in the analog domain is that a single transceiver unit may drive and control a plurality of antenna array units based on an analog weighting apparatus. A disadvantage is that a plurality of data streams cannot be carried. The hybrid beamforming has both the advantages of the beamforming in the analog domain and beamforming in the digital domain. Therefore, in an HBF antenna system, a quantity of transceiver modules may not be equal to a quantity of antenna elements.

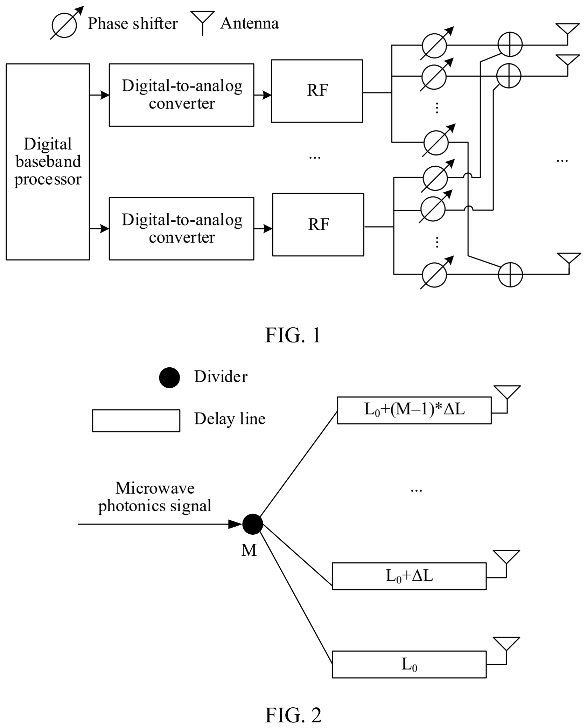

FIG. 1 is a diagram of a fully-connected HBF antenna system. The system includes M antenna elements and N transceiver units. A radio frequency (radio frequency, RF) module in FIG. 1 may be considered as a transceiver unit, and M is greater than N. In the fully-connected HBF antenna system, a phase shifter is inserted between any transceiver unit and any antenna element to implement beamforming in an analog domain, and any phase shifter may independently weight a signal. In this case, there are a total of N*M weights, where * represents multiplication. For a large-scale antenna system, a conventional fully-connected HBF antenna system needs N multiplied by M phase shifters, and a quantity of phase shifters is excessively large, resulting in excessively high hardware complexity and weight algorithm complexity. A simplified idea is that the fully-connected HBF antenna system implements only steering vector beams, and each beam controls two directions: horizontal and vertical directions. In this case, a minimum quantity of weights required in theory is 2N. How to specifically reduce the quantity of phase shifters to the minimum weight quantity 2N, in other words, how to decouple the quantity of phase shifters from an antenna element scale of the HBF antenna system, the microwave photonics field provides a good direction for implementing the foregoing requirement.

To simplify a steering vector HBF antenna system, an optical domain dispersion effect may be used. A basic idea is to use a hardware fixed (pure passive) dispersion phase shift network, where a phase of an output signal of the dispersion phase shift network changes with a wavelength of an input light source. After the wavelength of the light source is changed, phases of output signals of all channels in the entire dispersion phase shift network are synchronously refreshed, so that the phase shifter can be decoupled from the antenna element scale of the HBF antenna system.

FIG. 2 is a diagram of a conventional optical domain dispersion phase shift apparatus. Input light is a microwave photonics signal, which includes two signal components: a carrier component (whose wavelength is $\lambda_c$) and a sideband component (whose wavelength is $\lambda_s = \lambda_c + \Delta\lambda_{cs}$, where $\Delta\lambda_{cs}$ determines an antenna output RF frequency). The microwave photonics signal is input into a passive dispersion phase shift apparatus. A divider divides the microwave photonics signal into M signals, and the M signals are transmitted on M delay lines respectively. In the figure, a length difference between two adjacent delay lines is $\Delta L$. Then, the M signals are converted to an electrical domain and transmitted through an antenna. A phase difference of signals output by antenna elements connected to any delay lines with a transmission distance difference of $\Delta L$ is $\Delta\varphi$, and $\Delta\varphi$ satisfies the following relationship:

$$\Delta\varphi = \Delta\varphi_s - \Delta\varphi_c = 2\pi n_e \Delta L \left(\frac{1}{\lambda_s} - \frac{1}{\lambda_c}\right) = 2\pi n_g \Delta L \Delta\lambda_{cs}/\lambda^2$$

$\lambda = \lambda_C + \lambda_S)/2$. That is, $\lambda$ represents a center wavelength of the input microwave photonics signal.

It can be learned from the foregoing formula that, because $\Delta\lambda_{cs}$ is excessively small (for example, 0.224 nm), a dispersion effect of a conventional dispersion phase shift apparatus is extremely weak when signals are transmitted along the path. The weak dispersion effect may be understood as that, because $\Delta\lambda_{cs}$ is excessively small, if a determined $\Delta\varphi$ needs to be obtained, a needed length of $\Delta L$ is excessively large (for example, an order of magnitude of $\Delta L$ may be 200 m multiplied by a square of M). Consequently, the dispersion phase shift apparatus cannot be made in a small size or integrated on a single chip, and manufacturing costs and a manufacturing scale become a bottleneck limiting further application of the conventional dispersion phase shift apparatus.

In addition, it can be learned from the foregoing formula that, the conventional dispersion phase shift apparatus can only implement one-dimensional dispersion tuning, that is, can only adjust a phase of a signal in one direction, and cannot separately adjust the phase of the signal in two dimensions (dimensionality): horizontal and vertical dimensions, that is, cannot implement 2D beamforming.

In view of this, this application provides phase shift apparatus, to effectively resolve the foregoing technical problems. The following describes in detail the phase shift apparatus provided in this application with reference to the accompanying drawings.

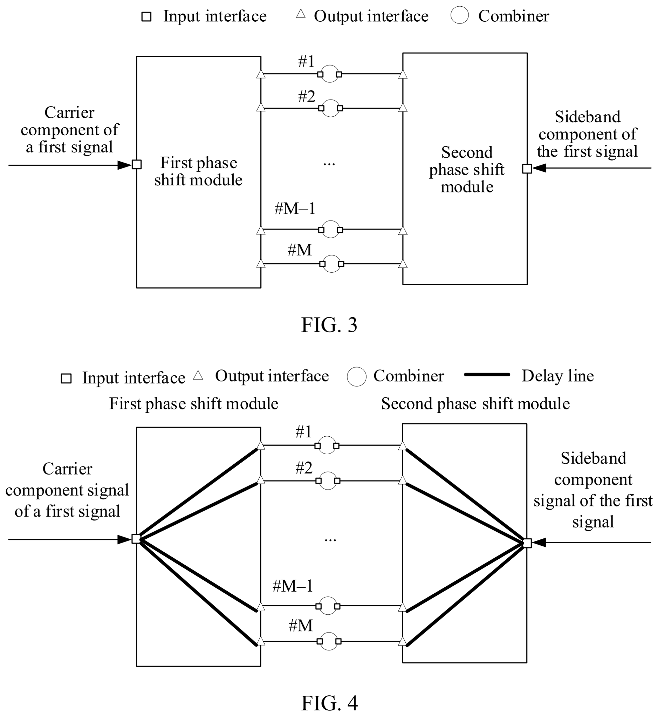

FIG. 3 is a diagram of a structure of a phase shift apparatus according to an embodiment of this application. As shown in FIG. 3, the phase shift apparatus includes a first phase shift module, a second phase shift module, and M combiners, where M is an integer greater than 1. An input interface of the first phase shift module is configured to receive a carrier component of a first signal, and one of M output interfaces of the first phase shift module is connected to a first input interface of one of the M combiners. An input interface of the second phase shift module is configured to receive a sideband component of the first signal, and one of M output interfaces of the second phase shift module is connected to a second input interface of one of the M combiners. An output interface of one of the M combiners is configured to connect to an input interface of one of M antenna elements in an antenna array.

For example, the phase shift apparatus is a dispersion phase shift apparatus. This is not limited in this application.

For example, the first signal may be a microwave photonics signal. The carrier component is generally a continuous wavelength (continuous wavelength, CW) optical signal component that does not carry a data signal in the microwave photonics signal, and may also be referred to as a (optical) local oscillator component. The sideband component is generally an optical signal component that carries a signal of a specific bandwidth in the microwave photonics signal, and may also be referred to as a signal component. If the microwave photonics signal includes two CW optical signal components of different frequencies, and neither of the two components carries a signal of a specific bandwidth, either component may be referred to as a carrier component or a sideband component, and the other component may be referred to as a sideband component or a carrier component. In addition, there are a plurality of manners of obtaining the microwave photonics signal. For example, the carrier component may be directly obtained through a light source output signal, or may be obtained by performing frequency-shift modulation on the light source output signal. The sideband component may be directly obtained through the light source output signal, or may be obtained by performing frequency-shift modulation on the light source output signal. When a center frequency difference between the carrier component and the sideband component is in a microwave frequency band, the microwave photonics signal is obtained.

In a possible implementation, in the descriptions in this embodiment of this application, that one of M elements A (for example, combiners) is connected to one of M elements B (for example, antenna elements) may also be understood as that one of the M elements A is connected to one of the M elements B on a one-to-one basis, that is, the M elements A are all connected to one element B, and the elements B connected to M elements A are different from each other

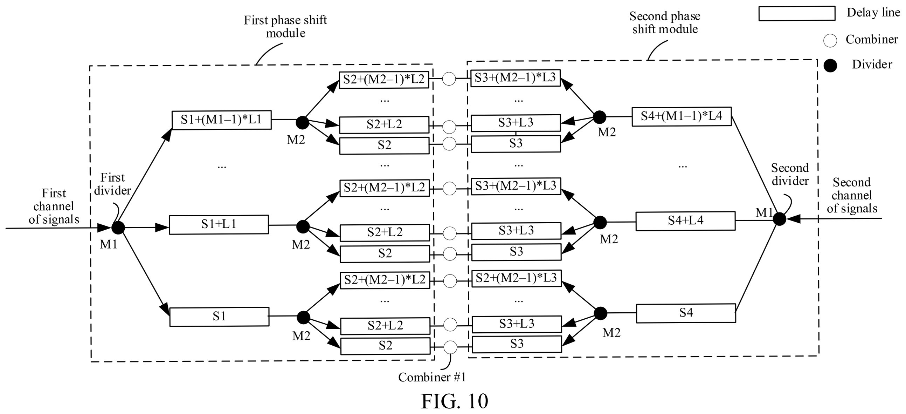

In FIG. 3, the carrier component and the sideband component of the first signal are respectively input to the apparatus from the input interfaces of the two phase shift modules of the phase shift apparatus. The CS (where C represents a carrier (carrier), and S represents a sideband (sideband)) separation dispersion mechanism can improve dispersion efficiency of the phase shift apparatus by an order of magnitude compared with a conventional phase shift apparatus, so that the phase shift apparatus can be made in a small size or integrated on a single chip. A specific reason is described below with reference to FIG. 10, and details are not described herein.

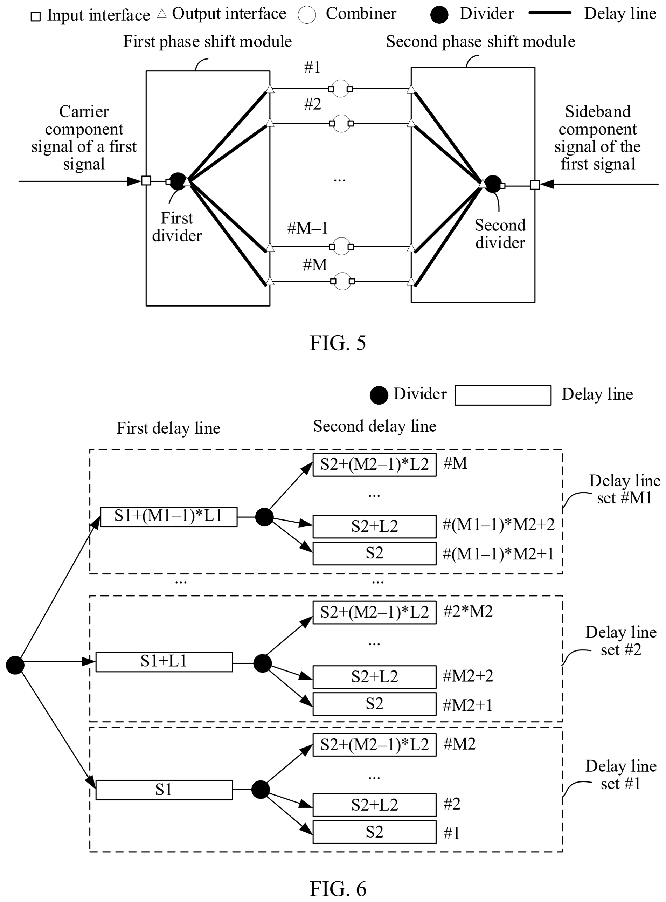

Optionally, as shown in FIG. 4, the first phase shift module and the second phase shift module each include M delay lines. A first end and a second end of one of the M delay lines of the first phase shift module (that is, two ends of the delay line) are respectively connected to the input interface of the first phase shift module and one of M output interfaces of the first phase shift module. Similarly, a first end and a second end of one of the M delay lines of the second phase shift module are respectively connected to the input interface of the second phase shift module and one of the M output interfaces of the second phase shift module. Optionally, as shown in FIG. 5, the first phase shift module may further include a first divider and the second phase shift module may further include a second divider, respectively. An input interface of the first divider is connected to the input interface of the first phase shift module, the first divider includes M output interfaces, and the M output interfaces are respectively connected to first ends of the M delay lines. Similarly, an input interface of the second divider is connected to the input interface of the second phase shift module, the second divider includes M output interfaces, and the M output interfaces are respectively connected to first ends of the M delay lines. The first divider is used as an example. A connection relationship of the first divider may be understood as follows: The first divider is configured to divide the carrier component of the first signal received from the input interface of the first phase shift module into M parts, and separately output the M parts to the first ends of the M delay lines through the M output interfaces.

It should be noted that the first divider and the second divider actually include M output interfaces. FIG. 5 shows only one output interface as an example, and this should not be construed as a limitation on this application.

The following specifically describes a length relationship between the M delay lines used for dispersion in the first phase shift module and the second direction shift module. For example, this application provides two possible length relationships between the M delay lines.

Implementation 1

Lengths of the M delay lines of the first phase shift module sequentially differ by a first value; and lengths of the M delay lines of the second phase shift module sequentially differ by a second value.

It should be noted that in this implementation, provided that the first phase shift module has the M delay lines whose lengths sequentially differ by the first value, and the second phase shift module has the M delay lines whose lengths sequentially differ by the second value, specific arrangement orders of the M delay lines in the two phase shift modules are not limited in embodiments of this application. For example, an arrangement order of the M delay lines in the first phase shift module or the second phase shift module is the same as an arrangement order of the M extension lines in FIG. 2.

Implementation 2

The M delay lines of the first phase shift module are included in M1 delay line sets, each delay line set includes M2 delay lines, and each of the M delay lines includes a first delay line and a second delay line that correspond to the delay line. Lengths of first delay lines corresponding to the M2 delay lines in the delay line set are the same, lengths of corresponding second delay lines sequentially differ by a first value (where L2 is used as an example below), and lengths of M1 first delay lines corresponding to the M1 delay line sets sequentially differ by a second value (where L1 is used as an example below). M1 is a quantity of horizontally dimensional antenna elements of the antenna array and M2 is a quantity of vertically dimensional antenna elements of the antenna array unit, or M1 is a quantity of vertically dimensional antenna elements of the antenna array unit and M2 is a quantity of horizontally dimensional antenna elements of the antenna array unit, and M is equal to a product of M1 and M2. Similarly, the M delay lines of the second phase shift module are included in M1 delay line sets, each delay line set includes M2 delay lines, and each of the M delay lines of the second phase shift module includes a first delay line and a second delay line that correspond to the delay line. Lengths of first delay lines corresponding to the M2 delay lines in the delay line set of the second phase shift module are the same, lengths of corresponding second delay lines sequentially differ by a third value (where L3 is used as an example below), and lengths of M1 first delay lines corresponding to the M1 delay line sets of the second phase shift module sequentially differ by a fourth value (where L4 is used as an example below). For ease of description, in embodiments of this application, a length feature of the M delay lines in Implementation 2 may be referred to as an optical path cascading feature.

It should be noted that in this implementation, neither $|L1 - L4|$ (that is, an absolute value of a difference between the second value and the fourth value) nor $|L2 - L3|$ (that is, an absolute value of a difference between the first value and the third value) is 0, and $|L1 - L4|$ is not equal to $|L2 - L3|$. For ease of description, in embodiments of this application, the feature may be referred to as a dispersion intensity cascading feature.

It should be further noted that, in Implementation 2, provided that the first phase shift module and the second phase shift module have the M extension lines that satisfy the foregoing length feature, specific arrangement orders of the M delay lines in the two phase shift modules are also not limited in embodiments of this application.

Based on the optical path cascading feature and the dispersion intensity cascading feature in Implementation 2, two-dimensional dispersion tuning may be implemented, that is, 2D beamforming may be implemented. A specific reason is described below with reference to FIG. 10, and details are not described herein.

It should be understood that the CS dispersion separation mechanism and the optical path cascading feature are two features independent of each other, and the two features may be applied independently or in combination with each other. This is not limited in this application. Implementation 2 may be considered as that the two features are applied in combination with each other. When the optical path cascading feature is applied independently, it may be considered that the dispersion phase shift module includes the first phase shift module or the second phase shift module in Implementation 2, and the input interface of the first phase shift module or the second phase shift module is configured to receive the first signal, that is, the first signal is input from an input interface of only one phase shift module without CS separation. For example, when the optical path cascading feature is applied independently, the dispersion phase shift mode may be shown in FIG. 2, and the lengths of the M extension lines in FIG. 2 only need to satisfy the optical path cascading feature provided in Embodiment 2.

In implementation 2, only the optical path cascading features of the M delay lines in the first phase shift module and the second phase shift module are provided. The optical path cascading features may be implemented by using different logical topology structures of the M delay lines. The following provides several possible logical topology structures of the M delay lines. For ease of description, the M delay lines of the first phase shift module are used as an example for description herein.

Logical topology structure 1: pure parallel feed

In this topology structure, the first delay line corresponding to each of the M1 delay line sets in the first phase shift module is separately a common delay line of the corresponding delay line set.

For example, as shown in FIG. 6, the first phase shift module includes the M delay lines, and the M delay lines are included in a delay line set #1 to a delay line set #M1. S1, S1+L1, ..., and S1+(M1-1)*L1 are respectively common first delay lines corresponding to M2 extension lines in the delay line set #1 to the delay line set #M1 corresponding to the first phase shift module, and S2, S2+L2, ..., and S2+(M2-1) *L2 are second delay lines of the M2 delay lines in any one of the M delay line sets of the first phase shift module.

In this topology structure, a quantity of dividers connected to all the delay lines is equal, and therefore, a network design is simple, and the power dividers tend to be of an equal-split type, which is easier to design.

It should be understood that, in embodiments of this application, quantities of output interfaces of dividers connected to delay lines in different topology structures may be different. In actual manufacturing, a matched divider may be selected for connection based on a quantity of actually divided signals. This is not limited in this application. For example, as shown in FIG. 6, the output interface of the divider connected to the first delay line may be greater than or equal to M1, and the output interface of the divider connected to the second delay lines may be greater than or equal to M2.

Logical topology structure 2: cascading parallel feed

In this topology structure, each of the M1 common first delay lines (that is, the M1 common first delay lines corresponding to the M1 delay line sets in FIG. 6) in the M1 delay line sets of the first phase shift module includes a third delay line and a fourth delay line, where the third delay line in the first delay line in at least two delay line sets of the M1 delay line sets of the first phase shift module is a common delay line of the at least two delay line sets; and/or the second delay line of each of the M delay lines of the first phase shift module includes a fifth delay line and a sixth delay line included in the delay line, where the fourth delay line in the second delay line in at least two delay line sets of the M1 delay line sets of the first phase shift module is a common delay line of the at least two delay line sets.

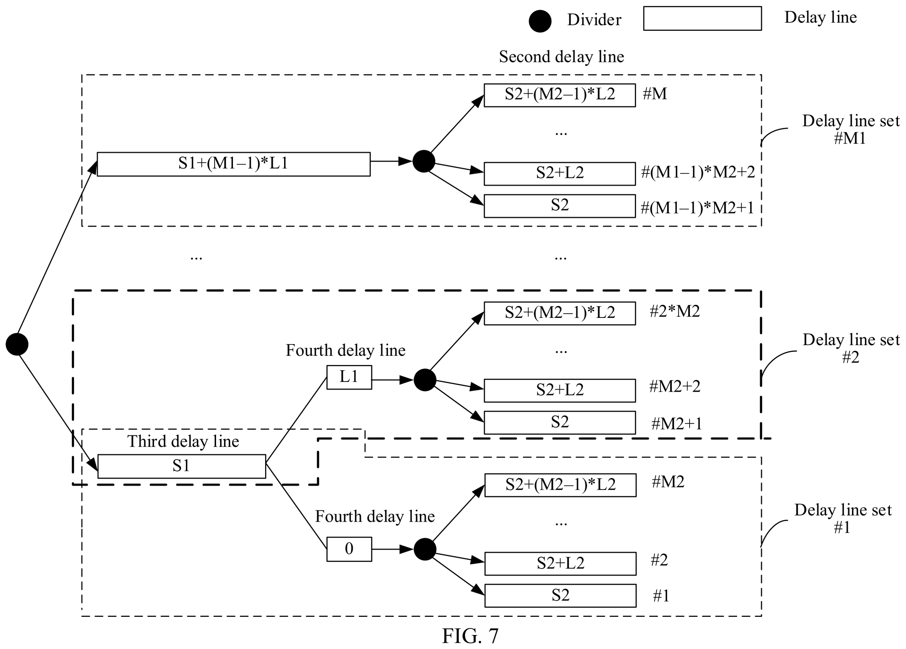

For example, as shown in FIG. 7, the first delay line of each of M delay lines of the first phase shift module includes the third delay line and the fourth delay line included in the delay line. In the delay line set #1 corresponding to a delay line #1 to a delay line #M2 and the delay line set #2 corresponding to a delay line #M2+1 to a delay line #2*M2, a common first delay line of the delay line set #1 includes a corresponding third delay line (S1) and a corresponding fourth delay line (0), a common first delay line of the delay line set #2 includes the corresponding third delay line (S1) and a corresponding fourth delay line (L1), and third delay line of the delay line set #1 and the delay line set #2 is a common delay line of the two delay line sets.

It may be understood that, in this topology structure, some delay lines of adjacent delay lines in the pure parallel-feed structure are multiplexed, to significantly reduce a chip size. In addition, when delay lines in a plurality of adjacent delay lines are multiplexed, for example, when initial phase error adjustment is performed between the delay line set #1 and the delay line set #2, and another delay line set (for example, a delay line set #M), only a single phase shifter is needed.

Logical topology structure 3: serial feed plus parallel feed

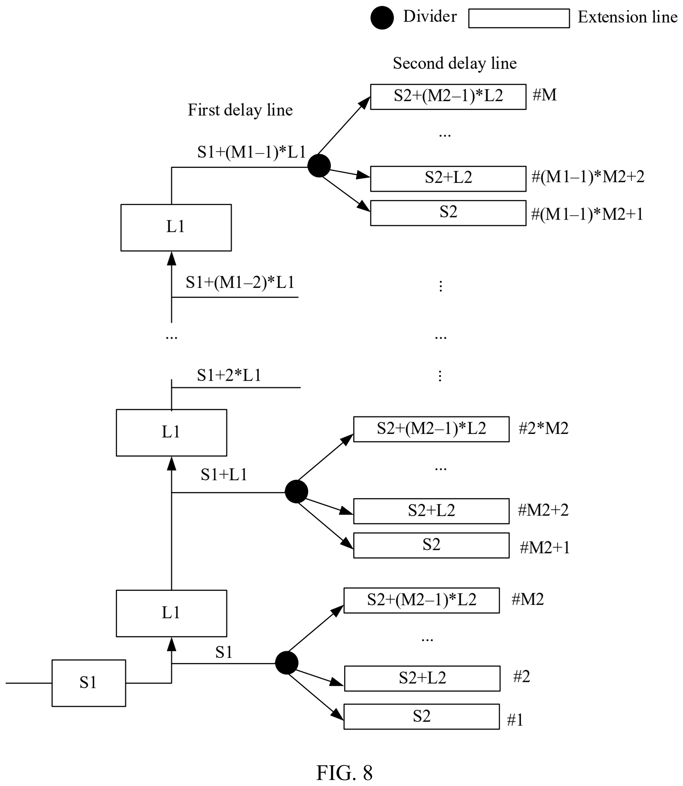

As shown in FIG. 8, in this topology structure, the M1 common first delay lines in the M1 delay line sets of the first phase shift module use a series-feed structure, and the second delay lines of the M2 delay lines in each of the M1 delay line sets of the first phase shift module use a parallel-feed structure.

Logical topology structure 4: pure serial feed

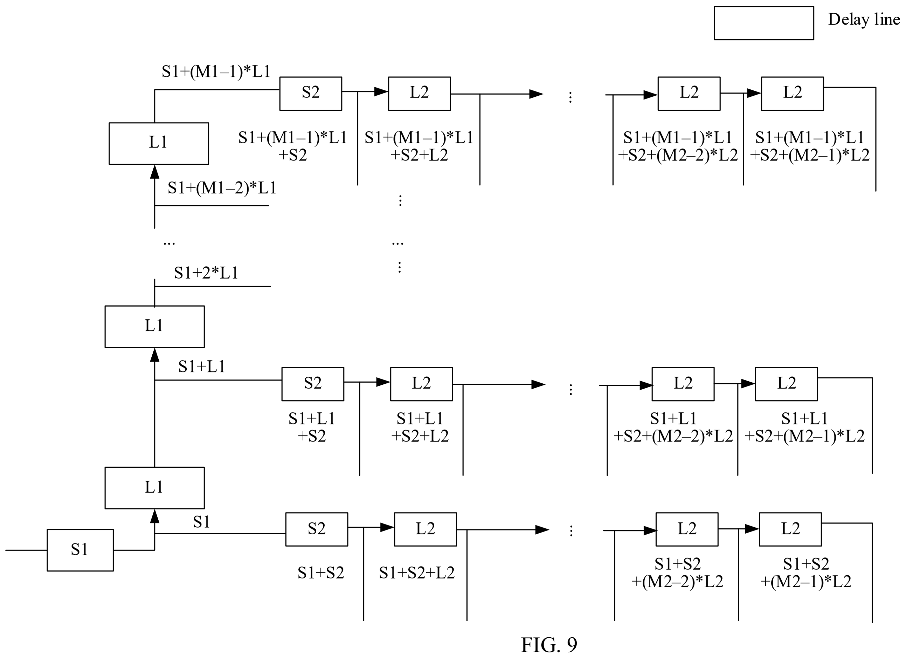

As shown in FIG. 9, in this topology structure, both the M1 common first delay lines in the M1 delay line sets of the first phase shift module and the second delay lines of the M2 delay lines in each of the M1 delay line sets of the first phase shift module use a series-feed structure. In this topology structure, maximum transmission delay line multiplexing can be achieved, and this topology structure is the most compact and the smallest in size in theory.

It should be understood that the M delay lines in the first phase shift module and the second phase shift module may use any one of the foregoing topology structures or another structure. This is not limited in this application.

The above describes in detail the phase shift apparatus provided in this application. The following describes, with reference to a specific phase shift apparatus, beneficial effects of CS separation and how to implement 2D beamforming based on optical path cascading.

FIG. 10 is a diagram of a structure of a specific phase shift apparatus according to this application. M delay lines in the apparatus use a pure parallel-feed logical topology structure, and an antenna array connected to M combiners in the apparatus includes M antenna elements. For example, $M1=M_H$ is a quantity of horizontally dimensional antenna elements, $M2=M_V$ is a quantity of vertically dimensional antenna elements, and $M=M_H*M_V$.

First, carrier components and sideband components of N microwave photonics signals are separated to generate a first channel of signals and a second channel of signals, where N is a positive integer. The first input signal includes the carrier components (that is, C components) of the N microwave photonics signals, and the second input signal includes the sideband components (that is, S components) of the N microwave photonics signals. Then, the first channel of signals and the second channel of signals are respectively input through input interfaces of the first phase shift module and the phase shift module, wavelength components of the carrier components of the N microwave photonics signals in the first channel of signals are $\lambda_{C1}$ to $\lambda_{CN}$, and wavelength components of sideband components of the N microwave photonics signals in the second channel of signals are $\lambda_{S1}$ to $\lambda_{SN}$. $|\lambda_{Cn}-\lambda_{Sn}|=\Delta\lambda_{cs}$, where $n\in[1, N]$.

Then, the two channels of signals (denoted as $c_0(t)$ and $s_0(t)$ respectively) are divided into $M=M_H*M_V$ parts by dividers in the apparatus, and each part is transmitted on a delay line of a specific length. These signals are respectively denoted as $c_{hv}(t) = \sum_{n=1}^{N} c_{nhv}(t) = \sum_{n=1}^{N} A_{Cnhv}\, e^{j\Phi(L_{Chv},\lambda_{Cn})}\, c_0(t)$ and

$s_{hv}(t) = \sum_{n=1}^{N} s_{nhv}(t) = \sum_{n=1}^{N} A_{Snhv}\, e^{j\Phi(L_{Shv},\lambda_{Sn})}\, s_0(t)$, where $n\in[1, N]$, $h\in[1, M_H]$, and $v\in[1, M_V]$. $A_{Cnhv}$,

and $A_{Snhv}$ represent amplitude responses of an $n^{th}$ wavelength component of each signal that has undergone dividing and transmission through a delay line of a specific length, $L_{Chv}$ and $L_{Shv}$ represent a length of a delay line for transmission of each signal, and $\Phi(L_{Chv},\lambda_{Cn})$ and $\Phi(L_{Shv},\lambda_{Sn})$ are corresponding phase responses. The phase shift apparatus includes $M_H*M_V$ combiners, which are respectively denoted as $Coupler_{hv}$, and are configured to combine corresponding $c_{hv}(t)$ and $s_{hv}(t)$ and then input the combined signals to an antenna element $Ant_{hv}$ in an antenna element array. $Ant_{hv}$ represents an antenna element in row h and column v in the antenna array. A signal output by the antenna $Ant_{hv}$ is denoted as:

$$E_{hv}(t) \propto Lowpass\{Re\{c_{hv}(t)\}Re\{s_{hv}(t)\}\}$$

$$= A_{hv}(t)\, cos\big(2\pi\, \Delta f_{CS}\, t + \Phi(L_{Chv},\lambda_C) - \Phi(L_{Shv},\lambda_S)\big)$$

The output signal includes signal components of the N microwave photonics signals. An $n^{th}$ component of the N microwave photonics signals may be denoted as:

$$E_{nhv}(t) \propto= A_{nhv}(t)\, cos\big(2\pi\, \Delta f_{CS}\, t + \Phi(L_{Chv},\lambda_{nC}) - \Phi(L_{Shv},\lambda_{nS})\big)$$

$$\approx A_{nhv}(t)\, cos\big(2\pi\, \Delta f_{CS}\, t + \Phi(L_{Chv} - L_{Shv},\lambda_n)\big)$$

$\lambda_n = (\lambda_{nC} + \lambda_{nS})/2$, which represents a center wavelength of the $n^{th}$ microwave photonics signal.

Therefore, a phase difference between transmit signals corresponding to $n^{th}$ microwave photonics signals on adjacent horizontal antenna elements in the antenna array is:

$$\Delta\varphi_{nH} = \Phi\big(L_{C(h+1)v} - L_{S(h+1)v},\lambda_n\big) - \Phi(L_{Chv} - L_{Shv},\lambda_n)$$

$$= \Phi\left(\big(L_{C(h+1)v} - L_{Chv}\big) - \big(L_{S(h+1)v} - L_{Shv}\big),\lambda_n\right) = \Phi(\Delta L_{CH} - \Delta L_{SH},\lambda_n)$$

$$= 2\pi(L1 - L4)(\lambda_n - \lambda_{ref\_nH})n_g/\lambda_n^2$$

Similarly, a phase difference between transmit signals corresponding to $n^{th}$ transmitted microwave photonics signals on adjacent vertical antenna elements in the antenna array is:

$$\Delta\varphi_{nV} = 2\pi(L2 - L3)(\lambda_n - \lambda_{ref\_nV})n_g/\lambda_n^2$$

$\lambda_{ref\_nH}$ and $\lambda_{ref\_nV}$ respectively represent center wavelengths of the $n^{th}$ microwave photonics signals when $\Delta\varphi_{nH}=0$ and $\Delta\varphi_{nV}=0$, and $n_g$ represents a refractive index of a delay line for signal transmission.

It should be noted that, for ease of description, FIG. 10 is merely an example in which corresponding $c_{hv}(t)$ and $s_{hv}(t)$ are combined and then input to the antenna element $Ant_{hv}$ in the antenna element array. In practice, only one of the M combiners that combine $c_{hv}(t)$ and $s_{hv}(t)$ is connected to one of the M antenna elements. This is not specifically limited in this application.

The following uses $\Delta\varphi_{nV}$ as an example to describe beneficial effects of CS separation. It can be learned that if L2 or L3 is 0, for example, L3 is set to 0 here,

$$\Delta\varphi_{nV} = 2\pi(L2)(\lambda_n - \lambda_{ref_{nV}})n_g/\lambda_n^2$$

A phase difference of a conventional phase shift apparatus in FIG. 2 is:

$$\Delta\varphi = 2\pi n_g \Delta L \Delta\lambda_{cs}/\lambda^2$$

It can be learned by comparing the foregoing two phase difference formulas that, in FIG. 2 and FIG. 9, when a same microwave photonics signal is input, that is, $\lambda_n=\lambda$, if a same $\Delta\varphi$ needs to be obtained, because $\Delta\lambda_{cs}$ is excessively small in a conventional dispersion phase shift network, a needed length of $\Delta L$ is excessively long, but the phase shift apparatus provided in this application performs CS separation during inputting to cause a parameter $(\lambda_n - \lambda_{ref_{nV}})/\lambda_n^2$ for determining $\Delta\varphi$ to be significantly larger compared to $\Delta\lambda_{cs}/\lambda^2$. For example, when a wavelength adjustment range of a light source ranges from 1535 nm to 1565 nm and a target RF frequency band is 6 GHz, a variation of $(\lambda_n - \lambda_{ref_{nV}})/\lambda_n^2$ ranges from 0 to $1.25*10^{-5}$ nm$^{-1}$, and a variation of $\Delta\lambda_{cs}/\lambda^2$ ranges from 0 to $7.7*10^{-10}$ nm$^{-1}$. When a same phase shift is achieved, a length of L2 is significantly shorter compared to a length of $\Delta L$, so that the phase shift apparatus can be made in a small size or integrated on a single chip.

In addition, based on an optical path cascading feature, a corresponding phase difference of a microwave photonics signal between a horizontally dimensional antenna element and a vertically dimensional antenna element can be generated. |L1 - L4| and |L2 - L3| may be used to represent horizontally dimensional dispersion intensity and vertically dimensional dispersion intensity, and there needs to be a difference between the |L1 - L4| and |L2 - L3|, to obtain $\Delta\varphi_{nH}$ and $\Delta\varphi_{nV}$ of different change trends (the feature may be referred to as a dispersion intensity cascading feature) based on a same $\lambda_n$. Therefore, 2D beamforming can be implemented based on the dispersion intensity cascading feature and the optical path cascading feature. The following provides two possible methods for implementing the dispersion intensity cascading feature.

Optionally, |L1 - L4|=K*|L2 - L3|, where K is a relatively large multiplication factor. For example, K=32.

Optionally, |L1 - L4| and |L2 - L3| are of a same order of magnitude, but are prime numbers of each other. For example, |L1 - L4|=32 and |L2 - L3|=31.

Based on the foregoing descriptions, it can be learned that when the length differences L1, L2, L3, and L4 are determined, a phase difference (that is, $\Delta\varphi_{nV}$ and $\Delta\varphi_{nV}$) of the n$^{th}$ microwave photonics signal between a horizontally dimensional antenna element and a vertically dimensional antenna element may be changed by adjusting the center wavelength $\lambda_n$ of the n$^{th}$ microwave photonics signal, to change a 2D direction of a beam.

When the phase shift apparatus provided in embodiments of this application is integrated on a single chip, optionally, |L1 - L4| and |L2 - L3| may be designed based on one or more of a plurality of design rules provided below.

(1) A maximum wavelength tuning range $\Delta\lambda_n$ is determined based on a light source performance and chip performance, and adjustment ranges of $\Delta\varphi_{nH}$ and $\Delta\varphi_{nV}$ are determined based on a phase shift requirement, to determine lower limits of |L1 - L4| and |L2 - L3|.

(2) upper limits of |L1 - L4| and |L2 - L3| are determined based on tolerable chip phase error performance, because a larger delay line length difference usually indicates a larger chip area and a larger phase shift error.

(3) If dispersion efficiency needs to be improved as much as possible in a limited chip area, L1 and L4 may have opposite signs, and L2 and L3 may have opposite signs. In this way, dispersion efficiency may be doubled in comparison with that achieved by dispersion phase shifting performed on a single carrier or a sideband component. For example, when $L1 = -L4$, $L1 = -L4$ is substituted into formula

$$\Delta\varphi_{nH} = 2\pi(L1 - L4)(\lambda_n - \lambda_{ref\_nH})n_g/\lambda_n^2$$

. In comparison with L4 equal to 0 (that is, dispersion phase shifting is performed on a single carrier component), $\Delta\varphi_{nH}$ is twice of the original manner, that is, dispersion efficiency is doubled.

In addition, another advantage when $L1 = -L4$ and $L2 = -L3$ is that designs of the M delay lines in the first phase shift module and the second phase shift module may be completely symmetric, thereby significantly reducing chip design complexity.

However, in some scenarios, for example, in a base station antenna system, the phase shift apparatus provided in embodiments of this application is integrated on a single chip. If the apparatus needs to be connected to an antenna, a size of the antenna is usually far larger than that of the chip, and the antenna cannot match the small-sized chip. For another example, a scale of the phase shift apparatus provided in embodiments of this application exceeds an integration capability of a single chip. In this case, fragmentation processing needs to be performed on the phase shift apparatus provided in embodiments of this application. A core of the fragmentation processing is to separately encapsulate components in the phase shift apparatus provided in embodiments of this application into a plurality of chips. The following specifically describes a fragmentation solution provided in this application.

The phase shift apparatus includes a first chip and M1 second chips. Both the first delay line of each of the M delay lines of the first phase shift module and the first delay line of each of the M delay lines of the second phase shift module are located in the first chip. Both the second delay lines of the M2 delay lines in one of the M1 delay line sets of the first phase shift module and the second delay lines of the M2 delay lines in one of the M1 delay line sets of the second phase shift module are located in one of the M1 second chips.

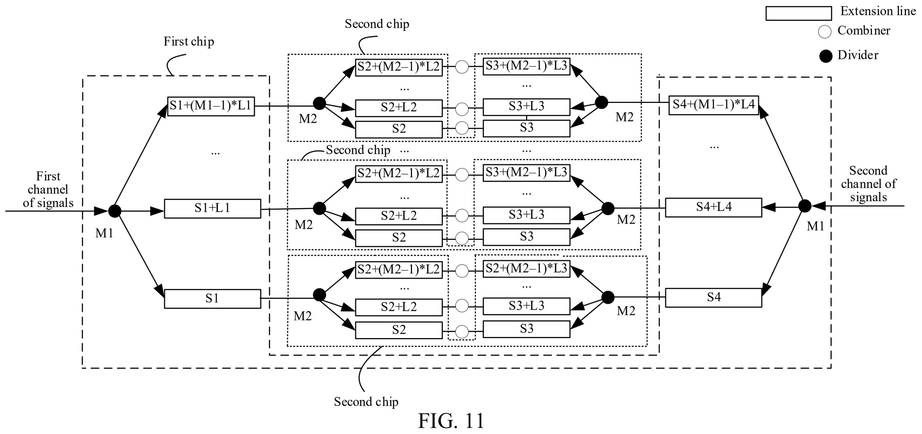

For example, a result of fragmentation on the phase shift apparatus shown in FIG. 10 based on the foregoing fragmentation solution is shown in FIG. 11, and details are not described herein again. Specifically, in this implementation, the fragmentation solution provided based on this embodiment of this application may have the following beneficial effects. First, locations of the M1 second chips may be flexibly adjusted, to match a large-size back-end module such as an antenna. Second, structures of the M1 second chips are completely the same, and the phase shift apparatus may be implemented by using only two types of optical chips. Third, each optical chip channel has an M1 or M2 scale. In comparison with a single chip that needs to be implemented in an M1*M2 scale, a specification requirement on a single chip is significantly reduced, implementation is easier, and a yield rate is better to control. Fourth, as shown in FIG. 11, a minimum quantity of connections needed between the first chip and the M1 second chips is only 2*M1, and packaging difficulty and costs are low. In addition, if an optical amplifier needs to be added between the first chip and the second chip, a quantity of needed optical amplifiers is also small.

It can be learned from the above that, with the use of the phase shift apparatus provided in embodiments of this application, dispersion efficiency in a CS separation dispersion manner is greatly improved, but an optical phase is extremely easily affected by a process error and environment disturbance. After CS separation, phase stability deteriorates, and a requirement on a chip design is greatly increased. Therefore, an embodiment of this application provides several possible initial phase error suppression solutions to resolve an initial phase error problem introduced by a CS separation dispersion mechanism.

(1) For the given parameters L1, L2, L3, and L4, a size of the phase shift apparatus is reduced as much as possible, so that different transmission delay lines are more compact and have closer equivalent refractive indexes. An implementation idea is that the delay line in the phase shift apparatus serves as both a delay line unit and a routing waveguide.

(2) If it cannot be ensured that initial phase error performance in all the delay lines satisfies the requirement, it may be considered that only an initial phase relationship between a plurality of adjacent delay lines satisfies the requirement. Based on a cascading feature of cascading parallel feed, a single phase shifter is added between a plurality of delay line sets on which cascading parallel feed is performed and one delay line set in other delay line sets to adjust an initial phase relationship, thereby significantly reducing the initial phase error requirement of the chip, and avoiding excessively complex peripheral control of the chip. For example, as shown in FIG. 7, when initial phase error adjustment is performed between the delay line set #1 and the delay line set #2, and another delay line set (for example, a delay line set #M), a single phase shifter is added to adjust an initial phase relationship.

(3) The carrier component and the sideband component are ensured as much as possible to be "transmitted along close paths". "Transmit along close paths" means that before transmission is performed, on delay lines in corresponding phase shift modules, on the carrier component and the sideband component that are output to a same combiner, corresponding transmission paths are as close as possible in physical locations, so that an initial phase error between different delay lines can be significantly reduced. For example, in FIG. 10, a path between an input interface of a first divider from which a carrier component output to a combiner #1 is transmitted to a first end of an extension line (S1+S2) and a path between an input interface of a second divider from which a sideband component output to the combiner #1 is transmitted to a first end of an extension line (S3+S4) need to be as close as possible in physical locations. The following provides two specific implementations of transmission along close paths based on the phase shift apparatus shown in FIG. 10.

Implementation 1

The first phase shift module includes the first divider, the first divider includes M1 power division paths, the second phase shift module includes the second divider, and the second divider includes M1 power division paths. Deviations between lengths of the M1 power division paths of the first phase shift module and a first length and deviations between lengths of the M1 power division paths of the second phase shift module and the first length are both less than a first threshold. A first end of the M1 power division paths in the first divider is connected to the input interface of the first phase shift module, a second end of one of the M1 power division paths in the first divider is separately connected to a first end of one of the M1 common first delay lines of the first phase shift module, and a first end of one first delay line in the first phase shift module is the same as a first end of any one of M2 delay lines in a delay line set corresponding to the first delay line. A first end of the M1 power division paths in the second divider is connected to the input interface of the second phase shift module, a second end of one of the M1 power division paths in the second divider is separately connected to a first end of one of the M1 common first delay lines of the second phase shift module, and a first end of one first delay line in the second phase shift module is the same as a first end of any one of M2 delay lines in a delay line set corresponding to the first delay line. A deviation between a fourth length and a distance between N% of a path length of a first power division path and N% of a path length of a second power division path is less than a fourth threshold, the first power division path is a power division path that is used for transmission of a first signal and that is in M power division paths of the first phase shift module, the second power division path is a power division path that is used for transmission of a second signal and that is in M power division paths of the second phase shift module, and the first signal and the second signal are respectively the sideband component and the carrier component of the first signal that are output to a same combiner in the M combiners, where N is greater than 0.

The M1 common first delay lines of the first phase shift module may be understood as M1 first delay lines corresponding to M1 delay line sets of the first phase shift module. Similarly, the M1 common first delay lines of the second phase shift module may be understood as M1 first delay lines corresponding to the M1 delay line sets of the second phase shift module.

The M1 power division paths of the first divider are used as an example. The first end of the M1 power division paths of the first divider may be understood as the input interface of the first divider, and second ends of the M1 power division paths of the first divider may be understood as M1 output interfaces of the first divider. In this case, in the foregoing descriptions, that the first end of the M1 power division paths in the first divider is connected to the input interface of the first phase shift module, and the second end of one of the M1 power division paths in the first divider is separately connected to the first end of one of the M1 common first delay lines of the first phase shift module may be understood as that the first divider is configured to divide the carrier component of the first signal received from the input interface of the first phase shift module into M1 parts, perform transmission on the M1 parts on the M1 power division paths, and output the M1 parts to first ends of the M1 common first delay lines.

For a connection manner of the first divider, the input interface of the first phase shift module, and the M1 common first delay lines, refer to the connection manner of the first divider in FIG. 5. Similarly, for a connection relationship of the second divider, refer to the connection manner of the second divider in FIG. 5. Details are not described herein again.

It should be further understood that, that the deviations between the lengths of the M1 power division paths and the first length are less than the first threshold means that the lengths of the M1 power division paths are expected to be the same according to a manufacturing rule, but in actual manufacturing, the M1 power division paths may not be completely the same due to manufacturing precision, and therefore, differences between the lengths of the M1 paths and the first length only need to be less than the first threshold. Similar descriptions in embodiments of this application are not described again.

A feature of Implementation 1 is that all power division paths (all first power division paths and all second power division paths) may be wired with theoretically equal lengths, thereby avoiding an extra initial phase error caused by uneven lengths of delay lines.

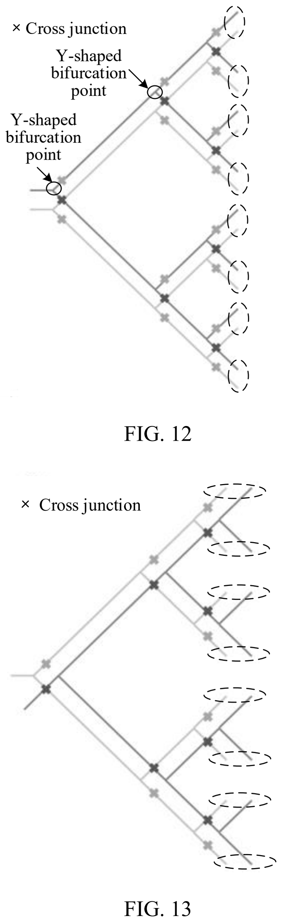

FIG. 12 is a diagram of a possible arrangement of a first power division path and a second power division path in a first divider and a second divider based on Implementation 1 according to an embodiment of this application. A path with a lighter color is the first power division path, and a path with a darker color is the second power division path. Two paths corresponding to any dashed line coil are a group of a first power division path and a second power division path that satisfy a requirement of Implementation 1. In addition, a cross junction with a lighter color is optional, and a cross junction with a darker color is mandatory. An optional waveguide crossing is introduced to further ensure that all power division paths in the figure are theoretically consistent. It should be understood that the cross junction is used to avoid interference caused by a crossing between two different paths.

Optionally, the first divider further includes one or more power dividers. For example, eight first power division paths of the first divider in dashed-line boxes in FIG. 12 have common paths of different lengths, and a power divider exists at a bifurcation point of any Y-shaped path in the eight first power division paths. The power divider is configured to divide a signal received on one path into two parts for transmission on two paths separately.

Implementation 2

The first phase shift module includes the first divider, the first divider includes M1 power division paths, the second phase shift module includes the second divider, and the second divider includes M1 power division paths. Deviations between lengths of the M1 power division paths of the first phase shift module and a second length are less than a second threshold, and deviations between lengths of the M1 delay lines of the second phase shift module and a third length are less than a third threshold. A first end of the M1 power division paths in the first divider is connected to the input interface of the first phase shift module, a second end of one of the M1 power division paths in the first divider is separately connected to a first end of one of the M1 common first delay lines of the first phase shift module, and a first end of one first delay line in the first phase shift module is the same as a first end of any one of M2 delay lines in a delay line set corresponding to the first delay line. A first end of the M1 power division paths in the second divider is connected to the input interface of the second phase shift module, a second end of one of the M1 power division paths in the second divider is separately connected to a first end of one of the M1 common first delay lines of the second phase shift module, and a first end of one first delay line in the second phase shift module is the same as a first end of any one of M2 delay lines in a delay line set corresponding to the first delay line. A deviation between a fourth length and a distance between N% of a path length of a first power division path and N% of a path length of a second power division path is less than a fourth threshold, the first power division path is a power division path that is used for transmission of a first signal and that is in M power division paths of the first phase shift module, the second power division path is a power division path that is used for transmission of a second signal and that is in M power division paths of the second phase shift module, and the first signal and the second signal are respectively the sideband component and the carrier component of the first signal that are output to a same combiner in the M combiners, where N is greater than 0.

FIG. 13 is a diagram of a possible arrangement of a first power division path and a second power division path in a first divider and a second divider based on Implementation 2 according to an embodiment of this application. A path with a lighter color is the first power division path, and a path with a darker color is the second power division path. Two paths corresponding to any dashed line coil are a group of a first power division path and a second power division path that satisfy a requirement of Implementation 2. A feature of Implementation 2 is that all first power division paths may be wired with theoretically equal lengths, and all second power division paths may be wired with theoretically equal lengths, but the first power division path and the second power division path are not necessarily equal in length. In addition, a cross junction with a lighter color is optional, and a cross junction with a darker color is mandatory. An advantage of Implementation 2 is mainly that when all power division path responses need to be consistent, a quantity of needed optional waveguide cross junctions is significantly reduced compared with that in FIG. 12.

For example, in the foregoing two implementations, a specific implementation in which the two power division paths are as close as possible in physical locations may alternatively be defined as that an average value of distances corresponding to the first power division path and the second power division path at 1%, 2%, 3%, ..., and 100% of the first power division path and the second power division path does not exceed a fifth threshold. This is not limited in this application.

Optionally, the first threshold, the second threshold, the third threshold, the fourth threshold, and the fifth threshold in Implementation 1 and Implementation 2 may be determined based on a radio frequency link phase error indicator, a direction precision indicator and sidelobe suppression ratio indicator of a beam directivity pattern that has undergone air interface beamforming, or a communication network capacity and coverage performance indicator. This is not limited in this application.

For example, a sub-apparatus of a phase shift apparatus corresponding to the phase shift apparatus provided in embodiments of this application obtained by removing some components falls within the protection scope of this application, provided that the technical problems proposed in this application can be resolved. For example, one or more combiners may be removed from the phase shift apparatus in FIG. 3, for example, the combiner #M in FIG. 3 may be removed. For example, one or more delay lines may be removed from the phase shift apparatus corresponding to FIG. 4. For example, the M paths in FIG. 4 are the M paths in FIG. 6. For example, a delay line (S1+S2+L2) in the delay line set #1 and a delay line (S1+L1+S2+(M2-1)*L2) in the delay line set #2 may be removed. For example, one or more second chips and combiners corresponding to these chips may be removed from the phase shift apparatus corresponding to FIG. 11. For example, the second chip corresponding to the delay line S2 and the delay line S3, and the combiners connected to the delay lines included in the second chip may be removed. Examples are not described herein one by one.

An embodiment of this application further provides an antenna apparatus. The antenna apparatus may include the phase shift apparatus described in embodiments of this application.

Optionally, the antenna apparatus may be an active antenna unit (active antenna unit, AAU). For example, the active antenna unit may include modules such as a baseband processing unit, an intermediate frequency processing unit, any phase shift apparatus described in embodiments of this application, a radio frequency processing unit, and an antenna.

Optionally, the antenna apparatus may be a remote radio unit (radio remote unit, RRU). For example, the remote radio unit may include modules such as a baseband processing unit, an intermediate frequency processing unit, any phase shift apparatus described in embodiments of this application, a radio frequency processing unit, and an antenna.

For example, it may be clearly understood by a person skilled in the art that, for the purpose of convenient and brief description, for a detailed working process of the foregoing apparatus and module, refer to a corresponding process in the foregoing method embodiments. Details are not described herein again.

An embodiment of this application further provides a method for phase shifting. The method includes: separating a first signal to generate a carrier component of the first signal and a sideband component of the first signal; inputting the carrier component of the first signal to an input interface of a first phase shift module of a phase shift apparatus #1; and inputting the sideband component of the first signal to an input interface of a second phase shift module of the phase shift apparatus #1. The phase shift apparatus #1 is any phase shift apparatus described in embodiments of this application.

In the several embodiments provided in this application, it should be understood that the disclosed apparatus may be implemented in other manners. For example, the described apparatus embodiments are merely examples. Division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application. Any variation or replacement readily figured out by a person skilled in the art within the technical scope disclosed in this application shall fall within the protection scope in this application. Therefore, the protection scope of this application shall be subject to the protection scope of the claims.

**Claims**

1.    A phase shift apparatus, comprising:

a first phase shift module, a second phase shift module, and M combiners, wherein M is an integer greater than 1, wherein
an input interface of the first phase shift module is configured to receive a carrier component of a first signal, and one of M output interfaces of the first phase shift module is connected to a first input interface of one of the M combiners;
an input interface of the second phase shift module is configured to receive a sideband component of the first signal, and one of M output interfaces of the second phase shift module is connected to a second input interface of one of the M combiners; and
an output interface of one of the M combiners is configured to connect to an input interface of one of M antenna elements in an antenna array.

2.    The apparatus according to claim 1, wherein

the first phase shift module comprises M delay lines, and a first end and a second end of one of the M delay lines of the first phase shift module are respectively connected to the input interface of the first phase shift module and one of the M output interfaces of the first phase shift module; and
the second phase shift module comprises M delay lines, and a first end and a second end of one of the M delay lines of the second phase shift module are respectively connected to the input interface of the second phase shift module and one of the M output interfaces of the second phase shift module.

3.    The apparatus according to claim 2, wherein

lengths of the M delay lines of the first phase shift apparatus sequentially differ by a first value; and
lengths of the M delay lines of the second phase shift apparatus sequentially differ by a second value.

4.    The apparatus according to claim 2, wherein

the M delay lines of the first phase shift apparatus are comprised in M1 delay line sets, each delay line set comprises M2 delay lines, M1 is a quantity of horizontally dimensional antenna elements of the antenna array and M2 is a quantity of vertically dimensional antenna elements of the antenna array, or M1 is a quantity of vertically dimensional antenna elements of the antenna array and M2 is a quantity of horizontally dimensional antenna elements of the antenna array, M is equal to a product of M1 and M2, and each of the M delay lines of the first phase shift module comprises a first delay line and a second delay line that correspond to the delay line, wherein lengths of first delay lines corresponding to the M2 delay lines in the delay line set are the same, lengths of corresponding second delay lines sequentially differ by a first value, and lengths of M1 first delay lines corresponding to the M1 delay line sets of the first phase shift module sequentially differ by a second value;
the M delay lines of the second phase shift apparatus are comprised in M1 delay line sets, each delay line set comprises M2 delay lines, and each of the M delay lines of the second phase shift module comprises a first delay line and a second delay line that correspond to the delay line, wherein lengths of first delay lines corresponding to the M2 delay lines in the delay line set of the second phase shift module are the same, lengths of corresponding second delay lines sequentially differ by a third value, and lengths of M1 first delay lines corresponding to the M1 delay line sets of the second phase shift module sequentially differ by a fourth value; and
neither a first difference nor a second difference is 0, and the first difference is not equal to the second difference, wherein the first difference is an absolute value of a difference between the first value and the third value, and the second difference is an absolute value of a difference between the second value and the fourth value.

5. The apparatus according to claim 4, wherein
the first value and the third value have opposite signs, and/or the second value and the fourth value have opposite signs.

6. The apparatus according to claim 4 or 5, wherein
a first delay line corresponding to each of M1 delay line sets in a third phase shift module is separately a common delay line of the corresponding delay line set, and the third phase shift module is the first phase shift module or the second phase shift module.

7. The apparatus according to claim 6, wherein

the first delay line of each of M delay lines of the third phase shift module comprises a third delay line and a fourth delay line comprised in the delay line, wherein the third delay line in the first delay line in at least two delay line sets of the M1 delay line sets of the third phase shift module is a common delay line of the at least two delay line sets; and/or
a second delay line of each of M delay lines of the third phase shift module comprises a fifth delay line and a sixth delay line comprised in the delay line, wherein the fifth delay line in the second delay line in at least two delay line sets of the M1 delay line sets of the third phase shift module is a common delay line of the at least two delay line sets.

8. The apparatus according to any one of claims 4 to 7, wherein the apparatus further comprises:

a first chip and M1 second chips, wherein
both the first delay line of each of the M delay lines of the first phase shift module and the first delay line of each of the M delay lines of the second phase shift module are located in the first chip; and
both the second delay lines of the M2 delay lines in one of the M1 delay line sets of the first phase shift module and the second delay lines of the M2 delay lines in one of the M1 delay line sets of the second phase shift module are located in one of the M1 second chips.

9. The apparatus according to any one of claims 6 to 8, wherein
the first phase shift module comprises a first divider, the first divider comprises M1 power division paths, a first end of the M1 power division paths in the first divider is connected to the input interface of the first phase shift module, a second end of one of the M1 power division paths in the first divider is separately connected to a first end of one of the M1 common first delay lines of the first phase shift module, and a first end of one first delay line in the first phase shift module is the same as a first end of any one of M2 delay lines in a delay line set corresponding to the first delay line.

10. The apparatus according to claim 9, wherein
the second phase shift module comprises a second divider, the second divider comprises M1 power division paths, a first end of the M1 power division paths in the second divider is connected to the input interface of the second phase shift module, a second end of one of the M1 power division paths in the second divider is separately connected to a first end of one of the M1 common first delay lines of the second phase shift module, and a first end of one first delay line in the second phase shift module is the same as a first end of any one of M2 delay lines in a delay line set corresponding to the first delay line.

11. The apparatus according to claim 10, wherein deviations between lengths of the M1 power division paths of the first phase shift module and a first length and deviations between lengths of the M1 power division paths of the second phase shift module and the first length are both less than a first threshold.

12. The apparatus according to claim 10, wherein deviations between lengths of the M1 power division paths of the first phase shift module and a second length are less than a second threshold, and deviations between lengths of the M1 delay lines of the second phase shift module and a third length are less than a third threshold.

13. The apparatus according to any one of claims 10 to 12, wherein
a deviation between a fourth length and a distance between N% of a path length of a first power division path and N% of a path length of a second power division path is less than a fourth threshold, N is greater than 0, the first power division path is a power division path that is used for transmission of a second signal and that is in M power division paths of the first phase shift module, the second power division path is a power division path that is used for transmission of a third signal and that is in M power division paths of the second phase shift module, and the second signal and the third signal are respectively the sideband component and the carrier component of the first signal that are output to a same combiner in the M combiners.

**14.** An antenna apparatus, comprising the phase shift apparatus according to any one of claims 1 to 13.

**15.** The apparatus according to claim 14, wherein the antenna apparatus is an active antenna unit AAU, or the antenna apparatus is a remote radio unit RRU.

**16.** A method for phase shifting, comprising: splitting a first signal to generate a carrier component of the first signal and a sideband component of the first signal;

inputting the carrier component of the first signal to an input interface of a first phase shift module of a phase shift apparatus, wherein the phase shift apparatus is the phase shift apparatus according to any one of claims 1 to 13; and
inputting the sideband component of the first signal to an input interface of a second phase shift module of the phase shift apparatus.

⌀ Phase shifter  𝖸 Antenna

Digital baseband processor → Digital-to-analog converter → RF → ⌀ ⊕ 𝖸

... ⌀ ... ⊕ 𝖸

Digital baseband processor → Digital-to-analog converter → RF → ⌀ ⌀ ⌀ ⊕ 𝖸

⌀ ⊕ 𝖸

FIG. 1

● Divider

▭ Delay line

$L_0+(M-1)*\Delta L$ 𝖸

...

Microwave photonics signal → M

$L_0+\Delta L$ 𝖸

$L_0$ 𝖸

FIG. 2

□ Input interface  △ Output interface  ◯ Combiner

FIG. 3

□ Input interface  △ Output interface  ◯ Combiner  ▬▬ Delay line

FIG. 4

□ Input interface △ Output interface ◯ Combiner ● Divider ━━ Delay line

First phase shift module      Second phase shift module

Carrier component signal of a first signal

First divider

#1
#2
...
#M−1
#M

Second divider

Sideband component signal of the first signal

**FIG. 5**

● Divider ▭ Delay line

First delay line      Second delay line

S1+(M1−1)*L1 ●

S2+(M2−1)*L2 #M
...
S2+L2 #(M1−1)*M2+2
S2 #(M1−1)*M2+1

Delay line set #M1

...

S1+L1 ●

S2+(M2−1)*L2 #2*M2
...
S2+L2 #M2+2
S2 #M2+1

Delay line set #2

S1 ●

S2+(M2−1)*L2 #M2
...
S2+L2 #2
S2 #1

Delay line set #1

**FIG. 6**

FIG. 7

FIG. 8

FIG. 9

FIG. 10

FIG. 11

FIG. 12

FIG. 13

## INTERNATIONAL SEARCH REPORT

| International application No. |
| --- |
| **PCT/CN2024/096762** |

**A. CLASSIFICATION OF SUBJECT MATTER**

H01P 1/18(2006.01)i; H04B 10/2575(2013.01)i; G02F 1/01(2006.01)n

According to International Patent Classification (IPC) or to both national classification and IPC

**B. FIELDS SEARCHED**

Minimum documentation searched (classification system followed by classification symbols)

IPC: H04B, H01P, G02F, G01N

Documentation searched other than minimum documentation to the extent that such documents are included in the fields searched

Electronic data base consulted during the international search (name of data base and, where practicable, search terms used)

CNABS, CNTXT, CJFD, VEN, ENTXTC, WOTXT, EPTXT, USTXT, IEEE: 混合波束成形, HBF, 微波光子, 移相, 延迟, 延时, 色散, 载波, 本振, 边带, 侧带, 信号, 分量, 分离, 分路, 分束, 分别, 天线, 合路, 体积, 小型, 二维, 2D, hybrid w beam ? form+, microwave w photonics, phase w shift+, delay, dispersion, carrier, local w oscillat+, side ? band, signal, component, split +, respectively, antenna, combin+, volume, size, small, 2D

**C. DOCUMENTS CONSIDERED TO BE RELEVANT**

| Category* | Citation of document, with indication, where appropriate, of the relevant passages | Relevant to claim No. |
| --- | --- | --- |
| A | CN 113900282 A (BEIJING INSTITUTE OF TECHNOLOGY et al.) 07 January 2022 (2022-01-07)<br>entire document | 1-16 |
| A | US 2002166956 A1 (NORTEL NETWORKS LTD.) 14 November 2002 (2002-11-14)<br>entire document | 1-16 |
| A | CN 111490815 A (UNIVERSITY OF ELECTRONIC SCIENCE AND TECHNOLOGY OF CHINA et al.) 04 August 2020 (2020-08-04)<br>entire document | 1-16 |
| A | JP 2020127090 A (KDDI RESEARCH INC) 20 August 2020 (2020-08-20)<br>entire document | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 August 2024** | **02 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/096762**

| Patent document cited in search report | | | Publication date (day/month/year) | Patent family member(s) | | | Publication date (day/month/year) |
|---|---|---|---|---|---|---|---|
| CN | 113900282 | A | 07 January 2022 | None | | | |
| US | 2002166956 | A1 | 14 November 2002 | US | 6586724 | B2 | 01 July 2003 |
| CN | 111490815 | A | 04 August 2020 | None | | | |
| JP | 2020127090 | A | 20 August 2020 | JP | 6946360 | B2 | 06 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310715387